# EUROPEAN PATENT APPLICATION

(11) **EP 4 297 211 A1**
(43) Date of publication of application: **27.12.2023**
(21) Application number: 22179900.0
(22) Date of filing: 20.06.2022
(51) Int. Cl.: H02G 5/02

(54) **ADJUSTABLE BUSBAR SUPPORT**

(71) Applicant: Siemens Gamesa Renewable Energy A/S, 7330 Brande (DK)
(72) Inventor: Djukic, Nenad, 2450 København SV (DK); Yusupov, Alisher, 7100 Vejle (DK)
(74) Representative: SGRE-Association

(57) **Abstract**

A busbar support element of an adjustable busbar support (90) configured to provide support for a busbar (100) is provided. A first engagement structure (21) of the busbar support element (11) is configured to engage a second busbar support element (12) in a first direction. The first engagement structure (21) is configured to allow a variation of a spacing in the first direction between the busbar support element (11) and the second busbar support element (12) when in engagement. A second engagement structure (22) is configured to engage a third busbar support element (13) in a second direction different from the first direction, wherein the second engagement structure (22) is configured to allow a variation of a spacing in the second direction between the busbar support element (11) and the third busbar support element (13) when in engagement. The busbar (100) is accommodated in the adjustable spacing between the busbar support element (11) and the second and third busbar support elements (12, 13).

## Description

### FIELD OF THE INVENTION

The present invention relates to a busbar support element of an adjustable busbar support, to a respective adjustable busbar support and to a method of assembling a busbar support for supporting a busbar.

### BACKGROUND

Busbars are conventionally employed for conducting high currents, and they are typically comprised of a bar or strip of metal, such as copper. Busbars are employed for transporting and/or distributing large amounts of electrical power. An exemplary application is a wind turbine generator, wherein the busbar may be connected to a stator of the electrical generator to transport generated electrical power. An example of a respective configuration is for example described in the document EP 3 800 349 A1.

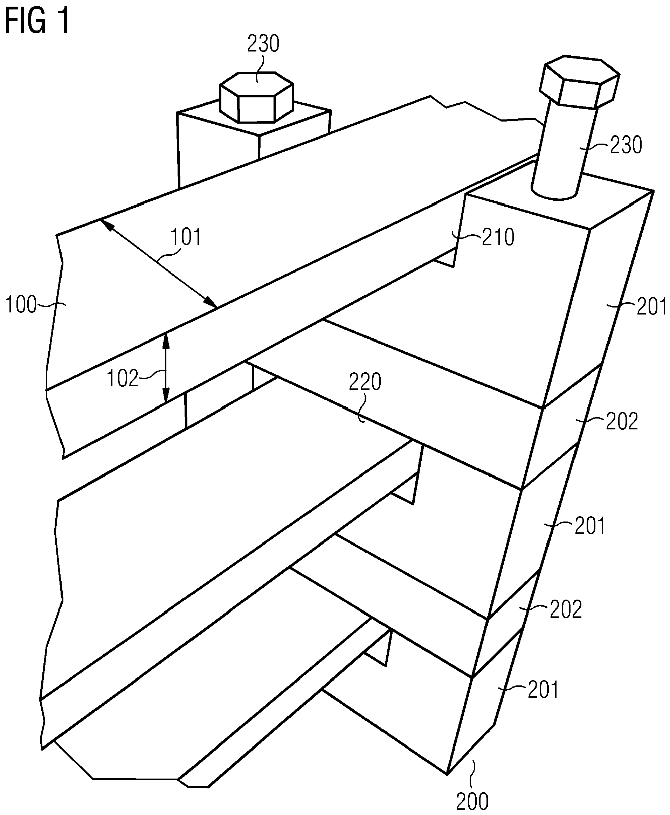

To support these busbars, existing solutions employ fixed-sized blocks, which are assembled to carry and support the busbars. An example is illustrated in Fig. 1, wherein a busbar support 200 includes blocks 201 and 202 that are stacked alternatingly in order to support three busbars 100. Blocks 201, 202 provide electrical insulation and mechanical stability. The blocks are generally adapted to the size of the busbar, in particular to its width 101 (designating the larger dimension perpendicular to the elongation of the busbar) and thickness 102 (designating the shorter dimension). The busbar support 200 may be fixed to the generator structure with two metal bolts 230, one at each side of the busbar. The bolts are pulled through the holes in the support blocks and are tightened to the generator structure. The blocks 201, 202 may be machined from a larger plate, for example using specialized machining tools. Since the blocks are typically made of glass fibers in epoxy resin that cause fast degradation of standard machining tools, the cost for manufacturing the blocks is relatively high, also due to the glass dust that develops during the machining process which requires special health and safety measures to be taken. Alternatively, the blocks 201, 202 may be moulded, which requires a mould (also called "template") for each of the blocks, the manufacturing of which is generally expensive.

Both, the busbar 100 and the support 200, suffer from tolerances, so that gaps 210, 220 in width direction or thickness direction may develop, or, if the busbar is too wide, it will not be possible to assemble the support. In case of a busbar insulation failure, the phase current carried by the busbar can creep over the surface of the support towards the grounded generator structure, causing a phase to ground short circuit fault. This may result in a generator breakdown that might require dismounting the generator from the wind turbine, resulting in significant repair costs and efforts. For example, when the busbar thickness is too large compared to a spacing providing by blocks 201, 202, a vertical gap between blocks 201, 202 may develop, wherein the bolt 230 is exposed. This may result in a shortened creepage and clearance distance between the busbar and the grounded bolt, and due to the shorter path to ground, a fault current may develop much easier.

To solve such problems, it is possible to adapt the size of blocks 201, 202. However, this may result in an expensive production delay. Furthermore, additional machining may be required, or new moulds may need to be made, resulting in further delay and costs. Also, a generator may include multiple different sizes of busbars, and may thus require a corresponding number of differently sized supports 200. Also, a new type of generator will generally have a busbar size that is unique for that generator, which may for example depend on the current value which the busbar is supposed to carry. Accordingly, busbar supports are generally newly designed for each new generator type. A manufacturer thus needs to keep several different sizes of busbar supports 200 in stock, and may need to adapt the sizes of the supports for each new generator type. This generally results in additional design and manufacturing costs, as for example new moulds must be made. The conventional way of supporting busbars, for example in a wind turbine generator, thus suffer from several drawbacks.

### SUMMARY

Accordingly, there is a need to mitigate at least some of the drawbacks mentioned above and to provide an improved busbar support.

This need is met by the features of the independent claims. The dependent claims describe embodiments of the invention.

According to an embodiment of the invention, a busbar support element of an adjustable busbar support is provided. The busbar support element is configured to provide support for a busbar. The busbar support element comprises a first engagement structure configured to engage a second busbar support element in a first direction. The first engagement structure is configured to allow a variation of a spacing in the first direction between the busbar support element and the second busbar support element when in engagement. Optionally, it may further comprise a second engagement structure configured to engage a third busbar support element in a second direction different from the first direction. The second engagement structure may be configured to allow a variation of a spacing in the second direction between the busbar support element and the third busbar support element when in engagement. The busbar support element is configured to accommodate the busbar in the spacing between the busbar support element and the second busbar support element in width direction of the busbar and optionally to accommodate the busbar in the spacing between the busbar support element and the third busbar support element in a thickness direction of the busbar.

By means of such busbar support element (abbreviated herein as 'support element' or 'block'), the busbar support may accordingly be adjustable in the first direction and the second direction. Tolerances of both, busbar thickness and busbar width, may thus be accommodated by the busbar support without the need to machine or mould new blocks. Furthermore, the busbar support element may allow the supporting of busbars of different sizes, as it may allow an adjustment in the width direction and in the thickness direction of the busbar. It may thus not be required to design and machine differently sized blocks for the differently sized busbars used to transport electrical current in a particular electrical system, and it may likewise not be necessary to design and manufacture new busbar supports for newly developed or differently rated electrical systems. The different busbar sizes associated with such systems may be accommodated by the busbar support provided by the busbar support element. The busbar support element may thus provide a multi-function, as it may allow the support of busbars for multiple generator types and multiple differently sized busbars, thus reducing the overall costs. Also, since tolerances may be compensated by the adjustability, delays in production may be avoided and the risk of electrical failure may be reduced. A clearance between the blocks and the associated shortened creepage distance may in particular be avoided. Further, since the busbar support may be assembled of respective busbar support elements, it may not be required to machine different sizes or provide differently sized moulds. Also, the number of busbars supported by the busbar support may be easily adjustable by simply assembling additional busbar support elements. Only one or two types of busbar support elements may be required for assembling the adjustable busbar support.

In an embodiment, the first direction may be substantially orthogonal to the second direction. The first direction may be the width direction of the busbar, and the second direction may be the direction of thickness of the busbar. The busbar support may accordingly be adjustable both, in width direction of the busbar and in thickness direction of the busbar. It should be clear that the first and/or second direction can also be provided at an angle to the width/thickness directions of the busbar while still allowing a respective adjustability.

The first engagement structure may comprise a first side that provides a first support surface for the busbar and/or comprise a second side that provides a second support surface for a second (different) busbar. The first side may be opposite to the second side. The busbar support element may thus support a busbar above and below the first engagement structure, so that the support elements may be stacked to accommodate busbars therebetween. The variation in the second direction may vary the spacing between the first support surface of the (first) busbar support element and a corresponding second support surface of the third busbar support element. The first and second support surfaces may in particular be configured to support a lateral surface of the busbar (e.g. a surface defined by the extension in longitudinal and width directions of the busbar).

The busbar support element may comprise a side support surface configured to provide support for a side surface of the busbar (defined by the extension in longitudinal and thickness directions of the busbar), wherein the side support surface may extend in the second direction. For example, the variation in the first direction may vary the spacing between the side support surface of the (first) busbar support element and a corresponding side support surface of the second busbar support element, thus changing the spacing in width direction.

In an embodiment, the first engagement structure and/or the second engagement structure may be configured to allow a smooth variation of a spacing in the respective first or second direction, or may be configured to allow a variation between two, three, or more predefined spacings in the respective direction. It may thus accommodate plural, in particular three or more, different sizes in the width and/or thickness direction. Snap-in elements, such as notches, may for example be provided on the respective engagement structure to predefine different spacings and thus different distances in width and/or thickness direction.

Preferably, the first engagement structure and/or the second engagement structure is configured to slidingly engage the second busbar support element and/or the third busbar support element, respectively, to allow the variation in spacing. For example, a respective complementary engagement structure may be provided on the second and/or third support element, and this may be slidingly engaged.

In an embodiment, the first engagement structure comprises one, two, three or more fingers or slots that are configured to engage respective slots or fingers of the second busbar support element. Two fingers, e.g. pins, may form a slot therebetween. Both, the first and second busbar support elements may accordingly comprise respective fingers that engage each other. For example, one support element may include two or three fingers providing one or two slots, respectively, and the other support element may include one or two fingers that engage the respective slots. In some configurations, one support element may provide a number (1, 2, 3, or more) slots while the other support element may provide a corresponding number of fingers configured to engage the respective slots. In other embodiments, both, the first and second support elements, may comprise the same number of fingers. In any case, a stable and slidable support may be achieved that further provides electrical insulation between adjacent busbars.

In an example, the first engagement structure and/or the second engagement structure may comprise an interlocking structure that at least partially restricts movement in a direction perpendicular to the respective first or second direction. In some configurations, the interlocking structure may be formed by the fingers and/or slots themselves, for example by providing a staggered configuration of fingers, or respective structures providing the interlocking may be provided on the fingers and/or slots. An interlocking structure may for example be at least one of the shoulder, a slot, a keyway, a key, a groove, a rib, a recess, or a profile (such as a sawtooth or triangle profile). The interlocking structure may be formed on the finger or in the slot, in particular on a sidewall thereof (i.e. a wall facing an opposite wall of the slot, or a sidewall of a finger facing the sidewall of an adjacent finger). The interlocking structure of the first/second engagement structure may be complementary to a respective interlocking structure on a corresponding engagement structure of the second or third busbar support element, respectively.

The interlocking structure may be configured to provide alignment between the first/second engagement structure and the second/third busbar support element in a direction perpendicular to the first/second direction, respectively, and/or to transfer forces in a direction perpendicular to the respective first/second direction. The strength of a mechanical connection between the first support element and the second support element provided by the first engagement structure may thus be increased. In particular, it may allow the mechanical connection to take up forces generated between the busbars that are supported by the first and second support surfaces, which forces may be due to current flowing through the busbars.

The second engagement structure may comprise an annular sleeve protruding axially in the second direction and/or comprise an annular recess extending axially in the second direction. The annular sleeve and/or the annular recess may for example be shaped and sized so as to allow a formfitting engagement between the sleeve and the recess. Such engagement may be within tolerances, it may be a loose fit or interference fit. As the annular sleeve and the annular recess may be provided on opposite sides of the support element, they may not directly engage each other. However, the annular sleeve may engage an annular recess provided on the adjacent third busbar support element, which may have the same structure and shape, or vice versa. By providing the second engagement structure as a respective annular sleeve or annular recess, a sliding engagement and adjustment of the spacing in thickness direction of the busbar may be achieved. For example the sleeve may be configured to bridge a distance (e.g. gap) between the busbar support element and the third busbar support element when the spacing is varied in the second direction. It may thus for example prevent exposure of a fastening member (e.g. stud) extending through the sleeve. The sleeve may thus ensure that insulating material of the sleeve is present between the busbar and the fastening member, so that no air path between the busbar and the fastening element is present.

The busbar support element may for example comprise a through-hole configured to receive a fastening member for mounting the busbar support element. The sleeve and/or the recess may extend coaxially with the through-hole and may be configured to receive the fastening member therethrough. A fastening member may for example be a bolt, a stud, a screw, and the like. Fastening of the fastening member may for example fix the first and second spacings in place. The fastening member may clamp the busbar between the support elements, in particular between the first and the third support elements. As the fastening member extends through the sleeve and/or recess, and the sleeve and recess of adjacent support elements may engage, exposure of the fastening member may be avoided.

In an embodiment, the first engagement structure is configured to provide electrical insulation between a busbar on one side of the first engagement structure and a busbar on the opposite side of the first engagement structure. The two busbars may for example be supported by the respective first and second support surfaces mentioned above, and the engagement structure may provide a respective electrical insulation. The second engagement structure may be configured to provide electrical insulation between a busbar supported by the busbar support element and a fastening member extending through the second engagement structure. For example, the respective sleeve may provide such electrical insulation. The second engagement structure may thus eliminate a clearance distance between the grounded fastening member and the busbar.

The busbar support element may include a body made of insulating material. The first and/or second engagement structures may be integral with the body, or may be separate elements therefrom. The sleeve may for example be a separate element that is seated in a recess within the body of the support element. Similarly, the first engagement structure may be mechanically connected to such body.

In a preferred embodiment, the busbar support element is a single piece integral body. The first and second support structures, such as the fingers and/or sleeve, may thus be an integral part of the body. The busbar support element may be made of moulded material. For example, it may be moulded as a single piece. Preferably, the busbar support element is made of an electrically insulating material. The material may comprise glass fibers, it may be a plastic material.

According to a further embodiment of the invention, an adjustable busbar support is provided. The adjustable busbar support comprises a first busbar support element and a second busbar support element, each of which may have any of the configurations described herein. The first engagement structure of the first busbar support element may be configured to engage the first engagement structure of the second busbar support element. The respective engagement may allow a variation of the spacing in the first direction between the first and second busbar support elements.

The first engagement structure of the first busbar support element may be formed complementarily to the first engagement structure of the second busbar support element to allow the engagement. For example, the first engagement structure of the first and second busbar support elements may be configured to form a formfitting connection. This may also be termed "positive connection" or "form-locked connection", or "interlocking connection". The first support structures may comprise complementary fingers and/or slots, and optionally complementary interlocking features, as mentioned above. Examples are complementary shoulders, slot and key, complementary structures, or the like, formed e.g. in sidewalls of fingers and slots. These may provide additional mechanical support.

The first and second support elements may form one part of a bracket. Similarly configured third and fourth support elements may form a second part of a bracket, which together with the first part of the bracket clamp the busbar there-between.

For example, the adjustable busbar support may comprise a third busbar support element and/or a fourth busbar support element, each of which may have any of the configurations of the busbar support element described herein. The second engagement structure of the third/fourth busbar support elements may engage the second engagement structure of the first/second busbar support elements, respectively. The first engagement structure of the third busbar support element may further engage the first engagement structure of the fourth busbar support element. The first to fourth busbar support elements may thus form a structure around a space which may accommodate the busbar, wherein the spacing between the elements is adjustable both in width and thickness directions of the busbar.

The second engagement structure of all busbar support elements may be similar or identical, so that the orientation of the first bracket with respect to the second bracket may also be changed, i.e. the fourth support element may be in engagement with the first support element.

As mentioned above, the busbar may be clamped, when the busbar support is assembled, between the first engagement surfaces of the first and second support elements and the second support surfaces of the third and fourth support elements, which are provided on the respective first engagement structures. The side support surfaces of the first and second support elements may provide lateral support for the busbar; they may either be in contact with a busbar or may provide a certain clearance towards the busbar.

In an embodiment, the first and third busbar support elements may have a substantially identical shape, and/or the second and fourth busbar support elements may have a substantially identical shape. The first and second busbar support elements may have a different shape, or may also have a substantially identical shape. Substantially identical may refer to identical within the manufacturing tolerances, for example by manufacturing the respective support elements using the same or corresponding moulds. Accordingly, only one or two moulds may be required for making the busbar support for a number of different busbar sizes.

The adjustable busbar support may comprise plural pairs of first and second busbar support elements, which may be stacked on top of each other (they may in particular be engaged by their respective second engagement structures). One busbar may be arranged and supported between two pairs. A stack may for example include at least two, three, four or five pairs. One pair may terminate the adjustable busbar support, or a respective terminating element, which may have the form of a plate or bracket, may be provided. The adjustable busbar support may be configured to support at least three busbars.

In other examples, the third busbar support element may have a structure different from the first busbar support element. It may for example be a simple plate, e.g. an terminating plate, which may be engaged by the second engagement structure (e.g. it may have a hole for engagement by the sleeve). Such plate may span across both the first and second support elements and may also be engaged by a second engagement structure of the second support element. The plate may for example support nuts or bolts for mounting the busbar support.

It should further be clear that additional elements may be provided between the first support element and the second and/or third support elements. For example, a plate, e.g. a thin plate made of plastic or hard rubber, may be provided between the first and third busbar support elements. Such plate may for example include a hole that allows the second engagement structure to reach through the hole into engagement with the third support element (a longer sleeve/protrusion may be provided), or such plate may not extend all the way to the second engagement structure and may thus not interfere with the second engagement structure.

Also, one, two or more busbars may be supported in the space between the first busbar support element and the second/third busbar support element. For example, busbars carrying the same electrical phase may be supported. They may be separated by a respective plate.

The adjustable busbar support may further comprise one, two or more fastening members, which may extend through the second engagement structures of the busbar support elements (e.g. one for the stack of first elements and one for the stack of second elements). By tightening these fastening members, the busbar support elements may be fixed in place and the position of the busbars supported therebetween may be fixed.

The spacing in the first direction may be adjustable over a range of at least 10, 20, 30, 50, or even 100 mm. The spacing in the first (busbar width) direction may for example be variable between at least 60 and 80 mm, preferably at least 50 and 90 mm, e.g. between at least 40 and 100 mm. It is also possible to provide two or more types of busbar support elements; one type may for example be variable between 60 and 120 mm and the other between 120 and 200mm in the first direction. For example, the spacing in the first direction may be variable over a range of at least 10 or 20 mm, and this range may lie between the values of 40mm and 200mm. The spacing in the second direction may be variable by at least 2, 5, 10 or even 15 mm. The spacing in thickness direction of the busbar may for example be variable between at least 10 and 15 mm, at least 5 and 20 mm, or at least 2.5 and 30 mm. It should be clear that the required dimensions may be selected in dependence on the particular application.

According to another embodiment of the invention, an electric power system, in particular a wind turbine power generating system, is provided, which comprises one or more busbars and an adjustable busbar support having any of the configurations described herein, which supports the one or more busbars. According to a further embodiment of the invention, a wind turbine comprising a respective power system is provided. By such power system or wind turbine, advantages similar to the ones outlined above may be achieved. In particular, by avoiding exposure of the fastening members and increasing creepage distances, faults on the power system may be prevented, and the assembly may be facilitated and may be less expensive.

According to a further embodiment of the invention, a method of assembling a busbar support for supporting a busbar is provided. The method comprises providing a busbar support element having first engagement structure and engaging the first engagement structure with a second busbar support element in a first direction to accommodate the busbar in width direction between the busbar support element and the second busbar support element, wherein the engagement allows a variation of a spacing in the first direction between the busbar support element and the second busbar support element. Optionally, the busbar support element may have a second engagement structure, and the method may further comprise engaging the second engagement structure with a third busbar support element in a second direction different from the first direction to accommodate the busbar in thickness direction between the busbar support element and the third busbar support element, wherein the engagement allows a variation of a spacing in the second direction between the busbar support element and the third busbar support element.

The method may be employed with busbar support elements and a busbar support having any of the configurations described herein. The above outlined advantages may be achieved by such method.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary. For example, the adjustable busbar support may comprise busbar support elements having any of the described configurations, and the busbar support element may be configured as described with respect to the adjustable busbar support.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a prior art busbar support.
Fig. 2 is a schematic drawing showing a wind turbine power system including an adjustable busbar support according to an embodiment.
Fig. 3 is a schematic drawing showing a busbar support element according to an embodiment.
Fig. 4 is a schematic drawing showing a busbar support element according to an embodiment, which is complementary to the busbar support element of figure 3.
Fig. 5 is a schematic drawing illustrating the engagement of the busbar support elements of figures 3 and 4 to form an adjustable busbar support according to an embodiment.
Fig. 6 is a schematic drawing showing a top view of the busbar support element of figure 3.
Fig. 7 is a schematic drawing showing sectional side view along line A-A of the busbar support element of figure 6.
Fig. 8 is a schematic drawing illustrating the engagement of two of the busbar support elements of figure 3 to form an adjustable busbar support according to an embodiment.
Fig. 9 is a schematic drawing illustrating the engagement of two busbar support elements of figure 3 with two busbar support elements of figure 4 to form an adjustable busbar support according to an embodiment.
Fig. 10 is a schematic drawing illustrating a perspective sectional view of an adjustable busbar support according to an embodiment.
Fig. 11 is a schematic drawing showing a busbar support element according to a further embodiment.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

Embodiments disclosed herein provide an adjustable busbar support that is assembled from two, three, four or more busbar support elements, abbreviated herein as support elements or blocks (adaptable busbar support blocks, ABSus). Two blocks may be engaged in an adjustable manner in width direction of the busbar so as to provide adjustability of the support in width direction, and two blocks may adjustably engage in a thickness direction of the busbar so that the support is adjustable with respect to the busbar thickness. One busbar may thus be supported by four blocks, the spacings between which can be adjusted so that busbars of different sizes can be supported between these blocks. Only one or two types of blocks may thus need to be manufactured to accommodate a plurality of different busbar sizes. The blocks may thus be manufactured inexpensively. The blocks may further be provided with features that improve the electrical insulation towards grounded elements, such as fastening members used to mount the blocks. Also, they can easily accommodate tolerances of the busbar sizes to that assembly can continue and no new blocks need to be manufactured when a busbar size is at the limits of the allowable tolerance. It is further not required to keep stocks of a large variety of differently sized busbar supports, since the disclosed busbar support may accommodate all occurring busbar sizes.

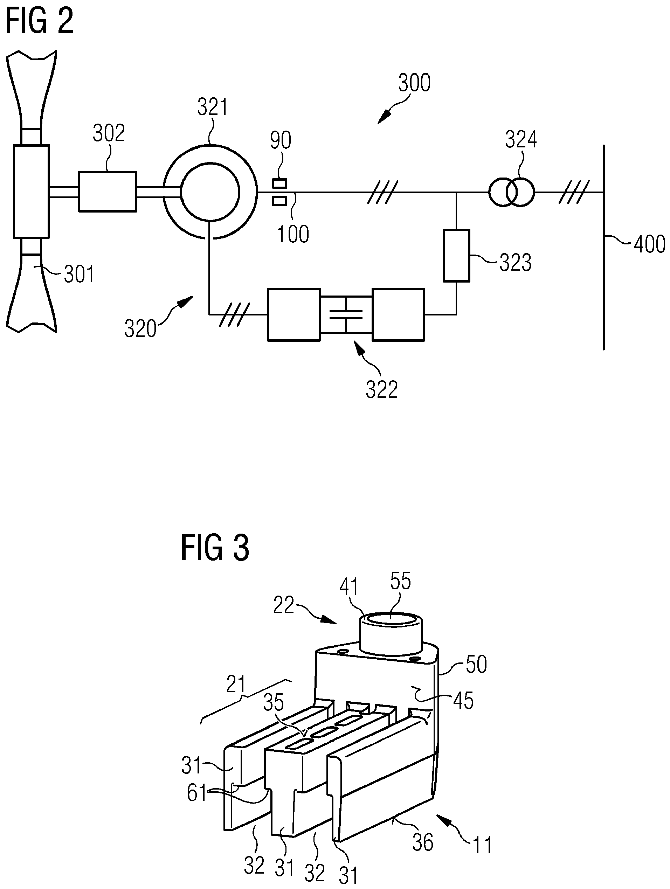

Fig. 2 schematically illustrates a power system 320 (in particular wind turbine power generating system) of a wind turbine 300, which includes a wind turbine rotor 301 with rotor blades coupled via a gearbox 302 to a generator 321 of power system 320. A power converter 322 is coupled to a rotor of generator 321 to control the power output from the generator, which may be supplied from a stator via a transformer 324 to a power grid 400. A line filter 323 may be provided between power converter 322 and grid 400. In such power system 320, busbars may be employed at different positions, for example for transporting current away from the generator 321, for distributing power to one or more converters, or for transporting converted electrical power. Such busbars 100 may be supported by an adjustable busbar support 90 having any of the configurations described herein. While Fig. 2 illustrates a power system 320 having a doubly-fed induction generator topology, the power system 320 may likewise have a full converter topology in which the adjustable busbar support may likewise be employed. It may further be employed in other types of power systems, e.g. in a conventional power plant.

Fig. 3 illustrates a busbar support element (block) 11 that includes a body 50 on which a first engagement structure 21 and a second engagement structure 22 are provided. The first engagement structure 21 comprises pins or fingers 31 that form slots 32 there-between. The pins or fingers 31 extend away from the body 50. On one side of engagement structure 21 that faces a busbar to be supported, a first support surface 35 is provided. On the opposite side of the engagement structure 21, a second support surface 36 is provided that supports a further busbar arranged on the opposite side of the fingers 31. The first and second support surfaces 35, 36 support a busbar lateral surface defined by the width direction 101 and the longitudinal direction of the busbar. The body 50 further comprises a side support surface 45 which may be provided to support a side surface of the busbar defined by the thickness direction 102 and the longitudinal direction of the busbar.

The first engagement structure 21 may include an interlocking structure 61 which in the example of Fig. 3 is provided in form of shoulders formed in the fingers 31. The interlocking structure 61 may be configured to provide an improved mechanical connection towards a second block. It may in particular improve the mechanical support between the two busbars that abut the first and second support surfaces 35, 36. The interlocking structure 61 may have any other suitable shape, such as slot, a key, one or more grooves, one or more ribs, triangular or saw-tooth profiles and the like.

Block 11 further comprises a second engagement structure 22 configured to engage a third block. In the example of Fig. 3, the second engagement structure includes a sleeve or annular protrusion 41 that extends from body 50, in particular in a direction corresponding to the thickness direction 102 of the busbar. It may in particular extend in axial direction parallel to the side support surface 45 and perpendicular to the first support surface 45. Sleeve 41 may be coaxial with a through-hole 55 that extends through body 50, which may be configured to receive a fastening member. The first engagement structure may extend in and provide engagement in a direction that is parallel to the first support surface 35 and perpendicular to the side support surface 45, and in particular in a direction parallel to the width direction 101 of the busbar 100.

The first engagement structure 21 is configured to engage a corresponding (complementary) engagement structure of a second block in an adjustable manner in the width direction 101. A busbar support assembled from two or more respective blocks may thus be adjusted in width direction. The second engagement structure 22 is configured to engage a third block in the thickness direction 102 of the busbar in an adjustable manner. Accordingly, when assembling the busbar support, the spacing provided between the third block and the first block 11 can be adjusted to accommodate the thickness of the busbar.

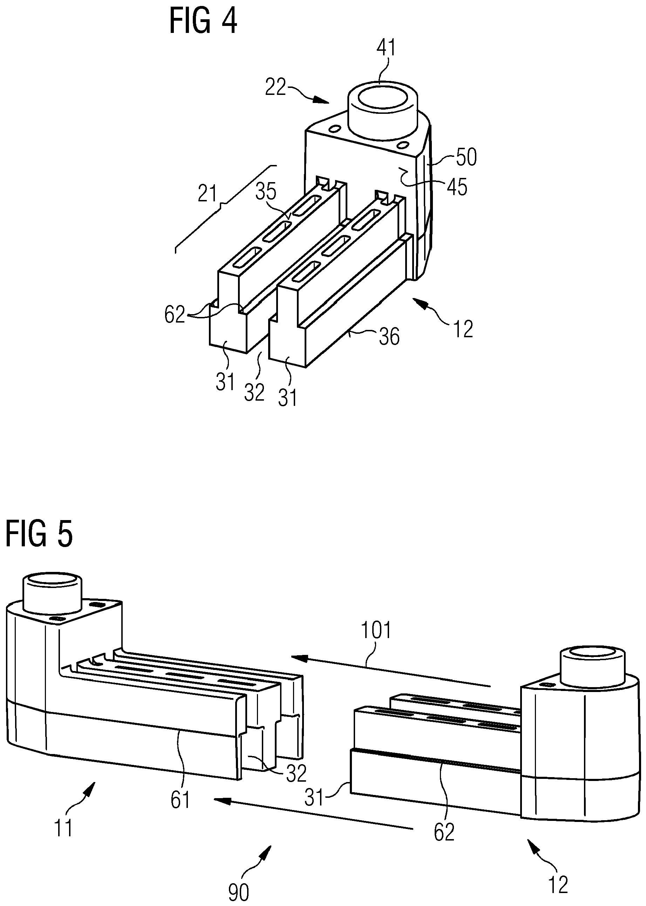

Fig. 4 illustrates a second block 12 that is configured substantially similar to the first block 11 of Fig. 3, so that the above explanations are equally applicable. In particular, the second block 12 comprises similarly first and second engagement structures 21, 22, first and second support surface 35, 36, a side support surface 45 and a body 50. The fingers 31 and slot 32 of the first engagement structure 21 are complementary to the fingers 31 and slots 32 of the first block 11. Similarly, the interlocking structure 62 of the second block 12 is complementary to the interlocking structure 61 of the first block 11. Consequently, the first engagement structures 21 of the first and second blocks 11, 12 can engage each other in the width direction 101 of the busbar 100, as illustrated in Fig. 5. The fingers 31 of the second block 12 slide into the slots 32 provided in the first engagement structure 21 of block 11, wherein a formfitting connection is established. Interlocking structures 61, 62 engage each other and besides extending the creepage distance also improve the mechanical stability.

The first engagement structures 21 of the first and second blocks 11, 12 preferably engage in a sliding manner so as to provide a seamless adjustment of the distance between the respective side support surfaces 45. The distance between these side support surfaces 45 can thus be varied by a large amount, e.g. more than 10, 20, 50 or 100 mm, so that busbars having a size in width direction that varies in quite a large range can be accommodated in the space between the side support surfaces 45, i.e. between the bodies 50 of the first and second blocks 11, 12. Alternatively, a snap-lock engagement may be provided wherein slots and ribs may for example be provided at the fingers at predetermined spacings between the two side support surfaces 45 so that predefined distances can be set between these side support surfaces.

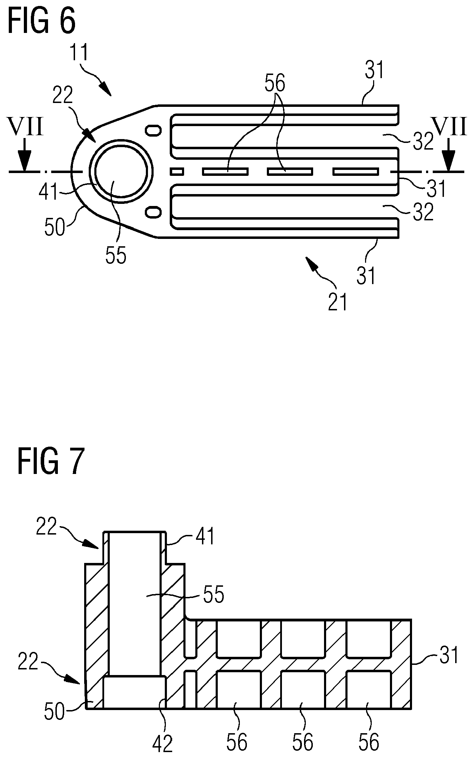

Fig. 6 is a top view of the first block 11 that shows the fingers 31 extending from body 50 and forming slots 32. The through-hole 55 provided in body 50 extends axially in a direction perpendicular to the first support surface 35, i.e. parallel to the thickness direction 102 of the busbar. The central finger 31 has recesses 56 provided therein which may facilitate moulding of the finger, in particular to enable the moulding of a respective thickness of material.

Fig. 7 shows a sectional side-view along line A-A of Fig. 6. The second engagement structure 22 includes the sleeve 41 and the recess 42 which is provided circumferentially in the through-hole 55. The recess 42 has an inner radial size that is matched to the outer radial size of sleeve 41 so that the sleeve 41 can engage the recess 42 (of a corresponding adjacent block).

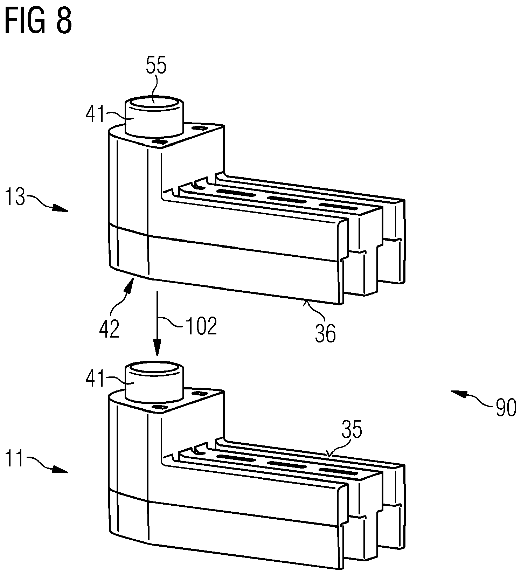

This is illustrated in Fig. 8, wherein the first block 11 is engaged with a third block 13 in the thickness direction 102 of the busbar to form the busbar support 90. The sleeve 41 of the second engagement structure 22 of block 11 thereby engages the recess 42 of the second engagement structure 22 of the third block 13. The engagement may be a sliding engagement and may in particular allow a spacing between the first support surface 35 of block 11 and the second support surface 36 of block 13 to be adjusted. Accordingly, between blocks 11 and 13, busbars of different thicknesses can be accommodated. The axial extension of sleeve 41 may for example be selected so as to allow adjustment over the desired thickness range, e.g. more than 2, 5, 10 or even 15 mm. It should be noted that the shape and structure of the third block 13 is substantially identical to the shape and structure of block 11.

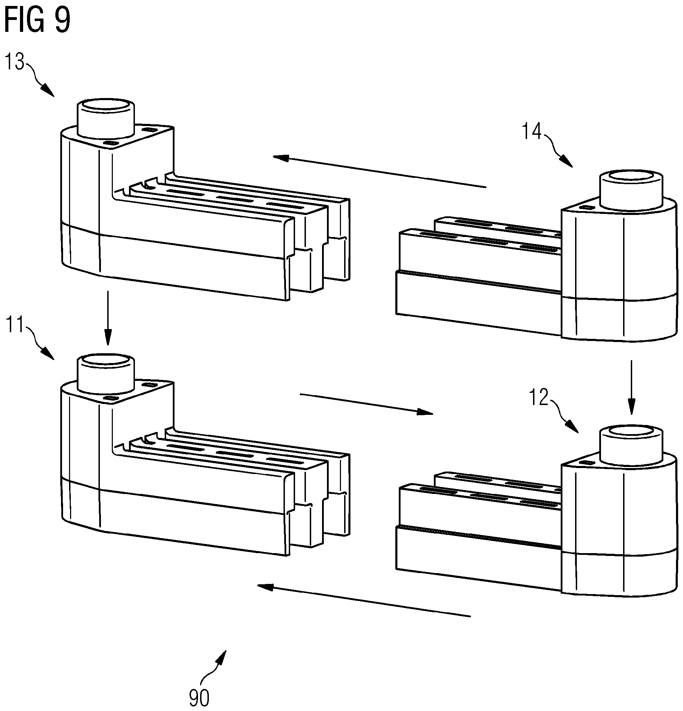

Fig. 9 illustrates the assembling of four blocks 11, 12, 13 and 14 to form an adjustable busbar support 90, wherein the space between these four blocks is adjustable to accommodate busbars of different width and different thicknesses. The assembly occurs as described with respect to Figs. 5 and 8 by engaging the first engagement structures of blocks 11 and 12, and correspondingly of blocks 13 and 14, and by further engaging the second engagement structures of blocks 11 and 13, and correspondingly of blocks 12 and 14.

In the present example, the blocks 11 and 13 are identical, and the blocks 12 and 14 are identical. Blocks 11 and 12 are different and in particular defer in the shape of their respective first engagement structures. The second engagement structures of all blocks may be similar, so that the blocks 13, 14 may also be turned by 180° (so that blocks 11 and 14 engage and blocks 12 and 13 engage). The second engagement structures may in other embodiments be different between blocks 11 and 12 so that the stacking of the same kind of block 11, 13 is ensured.

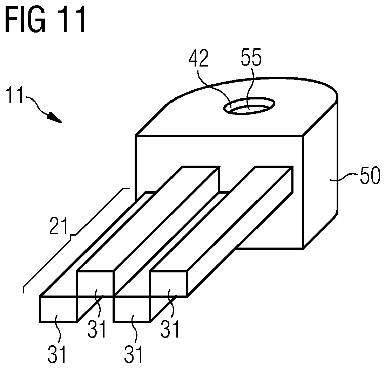

In other configurations, the first engagement structures may be configured to have the same shape for all blocks, so that blocks 11 to 14 may have a substantially identical shape and structure (figure 11 provides a respective example).

In the present example, each block 11 to 14 is a single piece, i.e. the first and second engagement structures are integral with the body 50. Such block may for example be manufactured by moulding (in a single moulding step), by machining or by 3D-printing or the like. In other examples, the first and/or second engagement structure may be a separate component that may be mounted to the body 50, or the body 50 may be mounted to the respective engagement structure. For example, the sleeve 41 may be separate from body 50, and body 50 may include a recess into which the sleeve 41 is positioned. Likewise, the fingers 31 may for example be inserted into the body 50, for example using a snap connection or the like. Providing each block as a single-moulded piece is however preferred to due to the ease of manufacture.

The first engagement structure of the first and second blocks 11, 12 may certainly have a different shape and may for example have a different number of fingers. Each block may have the same number of fingers, or one block may have a larger number or fingers than the other. For example, only one finger may be provided on a second block 12, and two fingers on a first block 11, or each block may comprise two fingers. Other configurations are conceivable.

First and second blocks 11, 12, may form a bracket, and plural such bracket may be stacked on top of each other to support plural busbars. Blocks 13 and 14 for example provide a second bracket that has a similar shape and configuration as the first bracket provided by blocks 11 and 12. Accordingly, by the first and second blocks 11, 12, a relatively large structure supporting a plurality of busbars may be assembled.

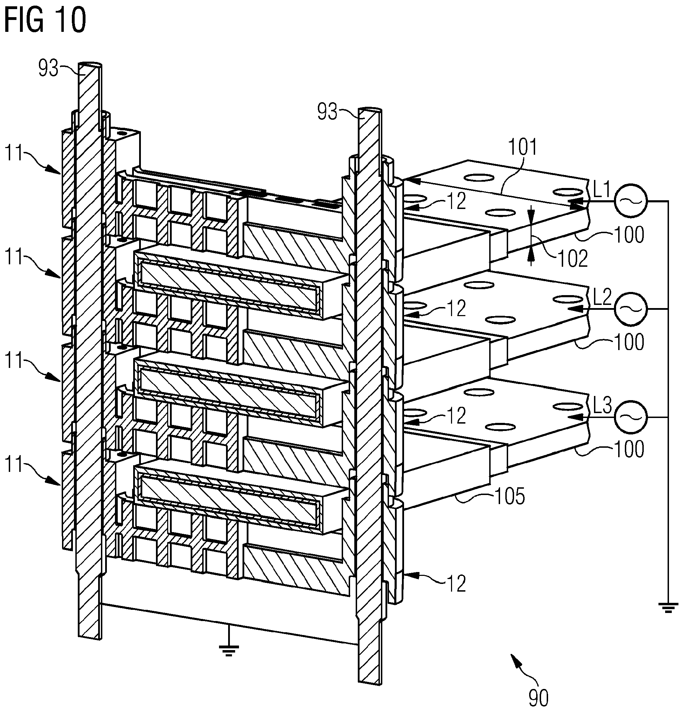

Fig. 10 illustrates an assembled busbar support 90 that supports three different busbars 100, which may carry current for three AC-phases L1, L2, L3. Each busbar has a width in direction 101, a thickness in direction 102, and an insulation 105 may be provided around each busbar in the region of the busbar support 90 (e.g. two layers). As can be seen, four first busbar support elements 11 and four second busbar support elements 12 are assembled to form the adjustable busbar support 90. The busbar support elements 11, 12 are engaged with their respective first and second engagement structures. Fig. 10 shows a sectional perspective view that illustrates fastening members 93, one extending through the first support elements 11, a further extending through the second support elements 12. By tightening the fastening members 93, the support elements 11, 12 may be fixed in place, both with respect to the width and the thickness directions of the busbars. The busbars may for example be clamped in the thickness direction. In the width direction, the spacing between first and second support elements 11, 12 may be adjusted so that a small gap still exists between the busbar and the side support surfaces, as shown in Fig. 10.

As visible in Fig. 10, the sleeve 41 of a block engages the recess 42 of the adjacent block, so that the spacing between the two blocks is adjustable in width direction while this second engagement structure is still in engagement. Accordingly, as the spacing is adjusted to accommodate different busbar thicknesses, the gap between the two blocks is bridged by the sleeve 41. The fastening member 93 is accordingly not exposed. Therefore, no air path between the busbar 100 and the grounded fastening member 93 exists. The clearance distance between the grounded part and the part under voltage may thereby be eliminated, thus reducing the risk of the flow of creepage currents and the risk of fault.

Fig. 10 illustrates the support of three busbars of the same size. It should be clear that in other implementations, the different busbars may have different sizes. The adjustable busbar support 90 may for example accommodate different busbar thicknesses. Further, it should be clear that for one electric phase, plural busbars may be provided. The structure illustrated in Fig. 10 may for example accommodate busbars of a single electrical phase, and further structures may be provided for accommodating respective busbars for further electrical phases. Insulation 105 around the busbar 100 is optional.

Fig. 11 illustrates a further exemplary implementation of the busbar support element or block 11. The busbar support element 11 of figure 11 may implement any of the support elements 11, 12, 13 and 14 explained above with respect to figures 3-10. In the example of Fig. 11, four fingers 31 are provided and extend from the body 50, in particular in the width direction of the busbar. A second engagement structure may optionally be provided (not shown). In the example of Fig. 11, the arrangement of the fingers 31 is such that the first block 11 and the second block 12 may have the same structure and shape. Accordingly, only a single type of block or busbar support element may need to be manufactured. The fingers 31 are staggered so that if a second entity of block 11 rotated by 180° is provided, the fingers 31 fit into each other and may form a formfitting connection. Again, the number of fingers may be varied, only two or six fingers may for example be provided. For forming a second engagement structure on body 50, the through-hole 55 may include a recess in which a respective sleeve 41 may be placed. A recess 42 may for example be provided on either side of the body 50, and a sufficiently sized sleeve may be inserted between adjacent blocks in the stack. Other configurations are certainly conceivable. By plural of the blocks 11 of figure 11, a structure corresponding to that of figures 9 and 10 may thus be formed, i.e. plural of blocks 11 may be assembled into a busbar support for supporting 1, 2, 3 or more busbars, as outlined in detail above.

In embodiments of the present invention, one or two types of blocks may be sufficient for assembling a busbar support capable of supporting a wide variety of different busbar thicknesses and widths. Production delays and/or re-works required for meeting exactly the size of a busbar may be prevented. Further potential failures and short-circuits may be prevented by embodiments disclosed herein. As only one or two different parts may need to be manufactured, the costs for manufacturing may be reduced, for example as only one or two moulds are required. Likewise the cost for installation time may be reduced. The need to keep differently sized supports in stock may be avoided, and providing a series production of only one or two block types using widely accessible technology, such as moulding or 3D-printing, may result in further cost reductions.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A busbar support element of an adjustable busbar support (90), wherein the busbar support element (11) is configured to provide support for a busbar (100), wherein the busbar support element (11) comprises:
- a first engagement structure (21) configured to engage a second busbar support element (12) in a first direction, wherein the first engagement structure (21) is configured to allow a variation of a spacing in the first direction between the busbar support element (11) and the second busbar support element (12) when in engagement; and
- a second engagement structure (22) configured to engage a third busbar support element (13) in a second direction different from the first direction, wherein the second engagement structure (22) is configured to allow a variation of a spacing in the second direction between the busbar support element (11) and the third busbar support element (13) when in engagement,
wherein the busbar support element (11) is configured to accommodate the busbar (100) in the spacing between the busbar support element (11) and the second busbar support element (12) in a width direction (101) of the busbar and to accommodate the busbar in the spacing between the busbar support element (11) and the third busbar support element (13) in a thickness direction (102) of the busbar.

2. The busbar support element according to claim 1, wherein the first direction is substantially orthogonal to the second direction, and/or wherein the first direction is the width direction (101) of the busbar (100) and the second direction is the thickness direction (102) of the busbar (100) to be supported by the busbar support element (11).

3. The busbar support element according to claim 1 or 2, wherein the first engagement structure (21) comprises a first side that provides a first support surface (35) for a busbar and/or comprises a second side that provides a second support surface (36) for a second busbar, wherein the first side is preferably opposite to the second side.

4. The busbar support element according to any of the preceding claims, wherein the first engagement structure (21) and/or the second engagement structure (22) is configured to allow a smooth variation of the spacing in the respective direction, or is configured to allow a variation between two, three or more predefined spacings in the respective direction.

5. The busbar support element according to any of the preceding claims, wherein the first engagement structure (21) and/or the second engagement structure (22) is configured to slidingly engage the second busbar support element (12) and/or the third busbar support element (13), respectively, to allow said variation in spacing.

6. The busbar support element of any of the preceding claims, wherein the first engagement structure (21) comprises one, two, three or more fingers (31) or slots (32) that are configured to engage respective slots (32) or fingers (31) of the second busbar support element (12).

7. The busbar support element according to any of the preceding claims, wherein the first engagement structure (21) and/or the second engagement structure (22) comprises an interlocking structure (61, 62) that at least partially restricts movement in a direction perpendicular to the respective first or second direction.

8. The busbar support element according to any of the preceding claims, wherein the second engagement structure (22) comprises a sleeve (41) protruding axially in the second direction and/or comprises a recess (42) extending axially in the second direction, wherein preferably, the sleeve (41) and the recess (42) are shaped and sized so as to allow a form-fitting engagement between the sleeve (41) and the recess (42) .

9. The busbar support element according to claim 8, wherein the busbar support element (11) comprises a through hole (55) configured to receive a fastening member (93) for mounting the busbar support element (11), wherein the sleeve (41) and/or the recess (42) extend coaxially with the through hole (55) and are configured to receive the fastening member (93).

10. The busbar support element according to any of the preceding claims, wherein the first engagement structure (21) is configured to provide electrical insulation between a busbar (100) on one side of the first engagement structure (21) and a busbar (100) on the opposite side of the first engagement structure (21), and/or wherein the second engagement structure (22) is configured to provide electrical insulation between a busbar (100) supported by the busbar support element (11) and a fastening member (93) extending through the second engagement structure (22).

11. The busbar support element according to any of the preceding claims, wherein the busbar support element (11) is a single piece integral body of molded material, and/or is made of electrically insulating material.

12. An adjustable busbar support that is configured to support a busbar (100), wherein the adjustable busbar support (90) comprises:
- a first busbar support element (11) according to any of the preceding claims, and
- a second busbar support element (12) according to any of the preceding claims,
wherein the first engagement structure (21) of the first busbar support element (11) is configured to engage the first engagement structure (21) of the second busbar support element (12), the engagement allowing a variation of the spacing in the first direction between the first busbar support element (11) and the second busbar support element (12).

13. The adjustable busbar support according to claim 12, wherein the first engagement structure (21) of the first busbar support element (11) is formed complementarily to the first engagement structure (21) of the second busbar support element (12) to allow said engagement, wherein the first engagement structures (21) of the first and second busbar support elements (11, 12) are preferably configured to form a form-fitting connection.

14. The adjustable busbar support according to claim 12 or 13, further comprising a third busbar support element (13) configured according to any of claims 1-11, wherein the second engagement structure (22) of the third busbar support element (13) is configured to engage the second engagement structure (22) of the first busbar support element (11), and/or further comprising a fourth busbar support element (14) configured according to any of claims 1-11, wherein the second engagement structure (22) of the fourth busbar support element (14) is configured to engage the second engagement structure (22) of the second busbar support element (12).

15. A method of assembling a busbar support for supporting a busbar (100), the method comprising:
- providing a busbar support element (11) having first engagement structure (21) and a second engagement structure (22);
- engaging the first engagement structure (21) with a second busbar support element (12) in a first direction to accommodate the busbar (100) in width direction (101) between the busbar support element (11) and the second busbar support element (12), wherein the engagement allows a variation of a spacing in the first direction between the busbar support element (11) and the second busbar support element (12); and
- engaging the second engagement structure (22) with a third busbar support element (13) in a second direction different from the first direction to accommodate the busbar (100) in thickness direction (102) between the busbar support element (11) and the third busbar support element (13), wherein the engagement allows a variation of a spacing in the second direction between the busbar support element (11) and the third busbar support element (13).
